# EUROPEAN PATENT APPLICATION

(11) **EP 4 806 862 A1**
(43) Date of publication of application: **16.09.2026**
(21) Application number: 26163333.3
(22) Date of filing: 09.03.2026
(51) Int. Cl.: C04B 14/14, C04B 22/06, C04B 28/12, C04B 28/18

(54) **METHOD FOR MAKING A MATERIAL AND CONSTRUCTION ELEMENT MADE WITH THE MATERIAL**

(30) Priority: 11.03.2025 IT 202500004956
(71) Applicant: Universita' IUAV di Venezia, 30135 Venezia (IT)
(72) Inventor: LEONARDI, Carmelo, 30135 Venezia (IT)
(74) Representative: De Filippis, Sara

(57) **Abstract**

Method for making a material including tephra, including, preferably in order, the following steps: a phase of making the tephra available, a phase of preparation of an activating solution based on sodium silicate and a strong base, a phase of mixing the tephra with the activating solution in order to obtain a solution to be polymerized, a polymerization phase of the solution in order to obtain a polymerized product, a cooking phase of the polymerized product in order to obtain the material, it is characterized by the fact that the cooking phase takes place at a temperature of at least 200°C.

## Description

The present invention concerns a method for the production of a material, in particular for the production of a material including tephra. The invention also concerns the material made with the method and a construction element made with the material.

Tephra is formed when magma, rising through the volcanic conduit towards the earth's surface, fragments into pieces of various sizes (fragmentation process) due to the release of the gases contained in it (exsolution process). This process can also occur due to the contact of magma with water (phreatomagmatic eruptions) or due to the crushing and expulsion of parts of the conduit or crater when vapors or jets of superheated water (phreatic eruptions) are erupted. The ash, along with the coarser products emitted during a volcanic eruption, can reach several kilometers in height depending on the intensity of the explosion. Transported upwards by hot gases, volcanic products rise inside the atmosphere forming an eruption column above the crater, the upper portion of which is moved laterally by the winds following their direction. The eruptive cloud thus formed will drop products of gradually smaller dimensions to the ground as it moves away from the crater. Smaller, lighter particles, such as ash, can remain in the atmosphere for days or even years and be transported thousands of kilometers from the eruptive vent. Volcanic ash is made up of solid particles smaller than 2 mm in size that are formed during the explosive activity of a volcano. Under the microscope, the ash appears to be made up of solidified magma particles (juveniles), fragments of pre-existing rocks and crystals. Ash is hard, abrasive, does not dissolve in water and is composed of silicates, especially aluminum and magnesium.

It is well known that these materials are usually disposed of, with the consequent disposal costs, which can be further increased in the event that this waste is to be considered as special waste.

The article "Pyroclastic volcanic ash as a potential precursor of alkali-activated binders - A case study from Tajogaite (La Palma, Canary Islands) volcano eruption" by Maosa et al. describes a method of using material from a volcano to prepare a binder. The process required a curing step, the first part of which was performed at a low temperature (ambient, 40 or 60 °C) for 3 days, followed by a second longer part at room temperature. In addition, this article suggests using a very fine method (36 microns), which requires extensive grinding of the starting material.

The state of the art also includes documents CN 117 321 019 and US 2023/295046.

### SUMMARY

The invention therefore covers a method for making a material including tephra, which involves a sequence of steps including the provision of tephra, the preparation of an activating solution based on sodium silicate and a strong base, and the subsequent mixing of tephra with this solution to obtain a mixture to be polymerised. a phase of polymerization of the mixture to obtain a consolidated product, and finally a phase of cooking of said product to obtain the final material. An advantage of this configuration is that it makes it possible to enhance a natural waste or widely available material such as tephra, transforming it through a controlled geopolymerization process into a building material with high mechanical, thermal and durability performance, proposing itself as a sustainable alternative to traditional materials.

According to the invention, the strong base is used in a specific concentration, and the activating solution comprises a defined percentage of sodium silicate. An advantage of this feature is that the use of precise concentrations and percentages for the components of the activating solution allows the polymerization reaction to be optimized, ensuring that a final product with consistent, predictable and high-quality mechanical properties is obtained.

Furthermore, according to the invention, the mixing phase of the tephra with the activating solution takes place at room temperature, continuously and through the use of a blade made of plastic material, preferably obtained through additive manufacturing. A further advantage of the present invention is that the execution of mixing at room temperature makes the process energy efficient and simplified. Continuous mixing ensures a homogeneous mixture, which is essential for the uniformity of the finished product, while the use of a plastic tool prevents contamination or unwanted reactions with the strongly alkaline solution.

According to the invention, the polymerization phase lasts for a minimum duration of time and takes place at room temperature, inside a non-stick container, preferably made of silicone. It is also an advantage of the present invention that product consolidation takes place without additional energy expenditure, and the extended service life ensures the complete development of the polymer matrix. The use of a non-stick container also facilitates the subsequent extraction of the cured product without damaging it, preserving its shape and integrity.

A further aspect of this disclosure is that the curing phase of the cured product is carried out within a defined temperature range and for a minimum duration of time. A significant advantage of this aspect is that this controlled heat treatment allows the structure of the material to be definitively consolidated, expelling residual water and maximizing its mechanical strength and durability properties in the long term.

According to the invention, the phase of making the tephra available may include a sieving sub-phase to use the fraction with a grain size below a given threshold. An advantage of this feature is that the use of fine particulate matter increases the reactive surface area available for the geopolymerization reaction, leading to a more efficient process and a denser, more compact final material with superior mechanical strength.

In addition, according to the invention, it is possible to mix the activating solution with a tephra mixture containing both a fine-grained fraction and a coarse-grained fraction. An advantage of this configuration is that it allows to obtain a composite material in which the fine fraction acts as a binder and the coarse fraction as an inert, allowing the final properties of the material, such as mechanical strength or shrinkage, to be modulated in a similar way to what happens in traditional concretes.

The invention also includes a building material and a construction element made using the aforementioned method. According to the invention, this construction element has a specific pentagonal shape with defined angles, two of which are not adjacent. A significant advantage of this aspect is that its particular geometry is designed to allow interlocking and coupling with other identical elements, allowing you to create complex and stable surfaces or structures, potentially self-supporting, with great precision and ease of installation.

A further aspect of this disclosure is that the construction element may have a central opening. An advantage of this feature is that on the one hand the overall weight of the element is reduced, facilitating its handling and installation, and on the other hand a compartment is created that can be used for the passage of technical systems or to improve the thermal and acoustic insulation performance of the final structure.

Finally, a construction compound includes a plurality of these construction elements, arranged in such a way that four of them can share a vertex at one of the right angles. An advantage of this configuration is that it demonstrates the modularity and functionality of the system, in which the individual elements combine to form a stable and repeatable structural node, allowing for the rapid and systematic construction of complex masonry or flooring structures.

The aim of the invention is to propose a method for making a tephra-based material.

Another purpose of the invention is to propose a method that allows waste materials to be reused.

Another purpose of the invention is to propose a method that allows the creation of a high quality material.

Another purpose of the invention is to propose a method that allows to reduce the amount of energy used compared to traditional methods.

Another purpose of the invention is to propose a method that allows to reduce the amount of water compared to traditional methods.

Another purpose of the invention is to propose a method that allows to reduce the costs related to the disposal of the products of volcanic eruptions.

Another purpose of the invention is to propose a method and a material that allow a road to be paved.

Another purpose of the invention is to propose a material that absorbs large quantities of water.

All these purposes, and others that will be clearly apparent from the description, are achieved by a method for making a material having the characteristics described in claim 1 and a construction element having the characteristics described in claim 9.

Other structural and functional characteristics of the present innovation and the relative advantages over the known technique will be even clearer and more evident from an examination of the following description, referring to an exemplary and preferred, but not limiting, form of realization of the method for making a material and the material according to the invention and from the attached drawings, where:

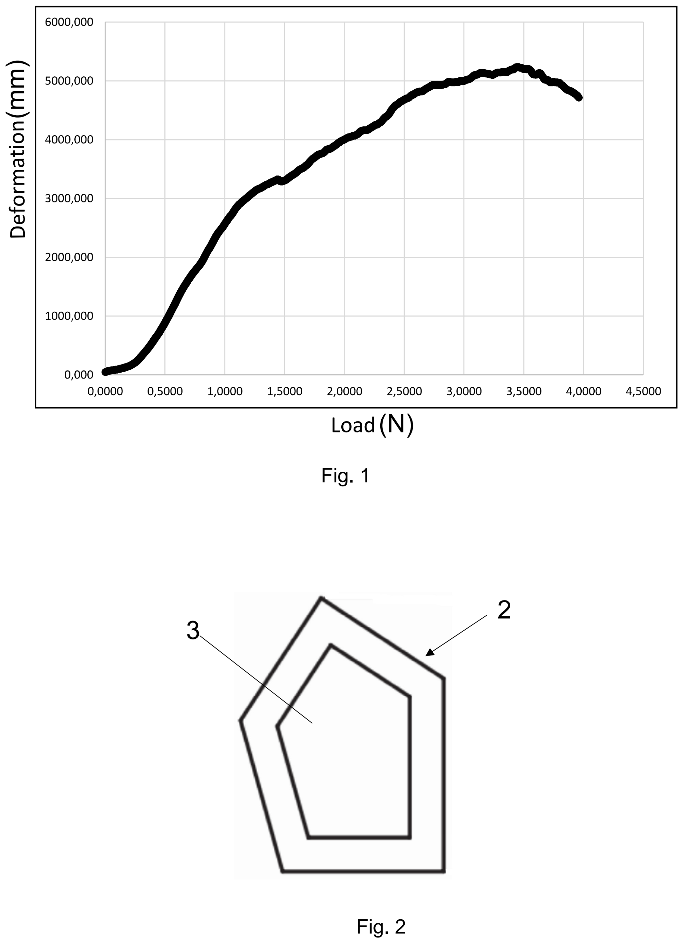

Figure 1 shows a graph of the load deformation of a construction element according to the invention,
Figure 2 shows in a superior view a construction element according to the invention,

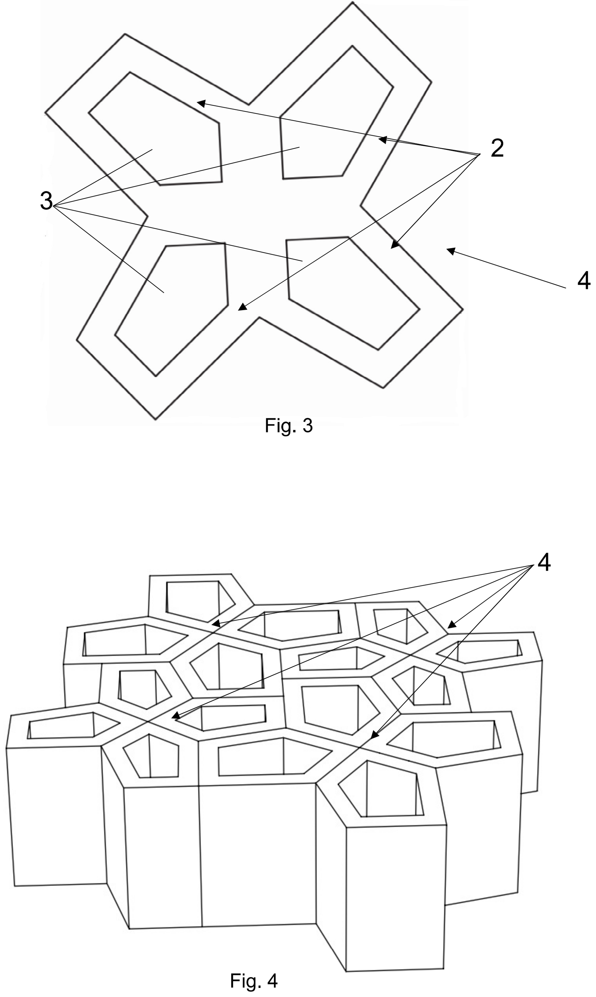

Figure 3 shows in top view a constructive compound according to the invention,
Figure 4 shows in perspective view a plurality of construction compounds according to the invention.

The present invention concerns a method for the production of a material, in particular for the production of a tephra-based material.

Tephra is the set of pyroclastic materials produced during a volcanic eruption, considered beyond their composition or size.

Appropriately, all the phases of implementation of the method according to the invention can be carried out using containers and/or utensils made of glass or polymeric materials, or in any case not made of metallic materials.

Appropriately, the method according to the invention can provide for a phase of making the tephra available. Preferably the tephra made available can have been sieved, in order to separate the one with a grain size greater than 0.2mm from the one with a smaller grain size. Appropriately for the method according to the invention, only tephra with a grain size of less than 0.2 mm or a mixture can be used, preferably in a 1:1 ratio between that with a grain size of less than 0.2 mm and that with a grain size of more than 0.2 mm.

Advantageously, the method according to the invention may not provide for further treatment phases of the starting material.

Appropriately, moreover, the method according to the invention can provide for a phase of preparation of an activating solution. Appropriately, the activating solution may include an aqueous solution of a strong base, e.g. NaOH, preferably 8M, and sodium silicate. Advantageously, the activating solution can comprise equal parts aqueous solution of a strong base and sodium silicate in aqueous solution, preferably for a total of 8 ±1 equivalents.

Advantageously, moreover, the method according to the invention can include a phase of mixing the tephra with the activating solution in order to obtain a solution to be polymerized. Advantageously, during the mixing phase, the solution can be kept under agitation, preferably by means of a blade made of plastic material, preferably by means of additive manufacturing techniques.

Appropriately, the method according to the invention may include, preferably after the mixing phase, a polymerization phase, during which the mixture is allowed to polymerize.

Preferably the curing step can be carried out at room temperature. More preferably, it can be made inside a non-stick container, for example it can be covered with a polymer sheath, preferably PVC. Advantageously, the curing phase can last at least 20 hours, and preferably about 24 hours. In particular, the non-stick container can have the shape of the construction element to be made.

Furthermore, according to the invention, the method can provide for a firing phase of the polymerized product in order to obtain the material. Preferably the cooking phase can be carried out at a temperature above 200°C and below 350°C, and more preferably it can last at least 6 hours. Appropriately, in this way it is possible to guarantee homogeneous cooking of the entire product, including its interior.

Advantageously, the cooking phase can involve the polymerized product being placed inside an oven when it is at room temperature. Advantageously, moreover, the material can be left inside the oven until it has returned to room temperature. This ensures the best mechanical properties and at the same time high energy savings.

Preferably the oven can be ceramic.

From what has been said, it is clear that the method according to the invention is advantageous compared to the known ones as it allows construction elements to be made from waste materials with energy and water savings.

The present invention also concerns a construction element 1 made of a material prepared according to the method described above. Appropriately, construction element 1 can be made in a shape configured to continuously anchor a two-dimensional space. Appropriately, the construction element 1 can have a central opening through 3, so that it can be used to tile an outdoor area without impeding the growth of vegetation.

Advantageously, construction element 1 can have a polygonal, and more preferably pentagonal, external shape. Preferably it can have the internal angles of 90° or 120°. In particular, it can have the two 90° angles in a non-adjacent position.

Furthermore, a plurality of construction elements 1 can be associated, preferably irreversibly, so as to form a construction compound. For example, the different construction elements 1 can be molded together, i.e. the mold can have the shape of the construction compound 4. Preferably each construction compound 4 can be composed of four construction elements 1, which preferably share a vertex, and are therefore connected via one of the 90° angles.

## Claims

1. Method for making a material including tephra, including, preferably in order, the following steps:
- a phase of making the tephra available,
- a phase of preparation of an activating solution based on sodium silicate and a strong base,
- a phase of mixing the tephra with the activating solution in order to obtain a solution to be polymerized,
- a polymerization phase of the solution in order to obtain a polymerized product,
- a cooking phase of the polymerized product in order to obtain the material,
it is **characterized by** the fact that the cooking phase takes place at a temperature of at least 200°C.

2. Method according to the previous claim **characterized by** the fact that the strong base is used in 8molar concentration.

3. Method according to one or more of the above claims **characterized by** the fact that the activating solution includes 17.5% sodium silicate.

4. Method according to one or more of the previous claims **characterized by** the fact that the mixing phase takes place at room temperature.

5. Method according to one or more of the above claims **characterized by** the fact that the curing phase lasts at least 24 hours and/or takes place at room temperature.

6. Method according to one or more of the above claims **characterized by** the fact that the firing phase is carried out at a temperature below 350°C and/or lasts at least 6 hours during which the oven is at the maximum temperature.

7. Method according to one or more of the above claims **characterized by** the fact that the cooking phase provides that the material to be cooked:
- is placed inside the oven when it is at room temperature and/or
- is removed from the oven when it has returned to room temperature.

8. Method according to one or more of the above claims **characterized by** the fact that: the tephra supply phase involves a tephra sieving sub-step, in order to separate the particulate matter larger than 0.2 mm from the smaller particulate matter, and that the tephra that is mixed with the activating solution has a particle size of less than 0.2 mm and/or that half of the tephra that is mixed with the activating solution has a grain size less than 0.2mm, and half has a grain size greater than 0.2mm.

9. Construction element (1) **characterized by** the fact that it is made of a material made with a method according to one or more of the previous claims and **characterized by** the fact that it has a pentagonal shape with angles of 90° and 120°, two non-adjacent angles of 90°.

10. Construction compound (4) **characterized by** the fact that it includes a plurality of construction elements (1) according to claim 9, in which the construction elements share the vertex of one of the 90° angles.
